# EUROPEAN PATENT APPLICATION

(11) **EP 1 936 529 A1**
(43) Date of publication of application: **25.06.2008**
(21) Application number: 06782952.3
(22) Date of filing: 23.08.2006
(51) Int. Cl.: G06F 21/20, G06F 1/00

(54) **ACCOUNT FALSE USE DETECTING/SUPPRESSING DEVICE, DATA COLLECTING DEVICE, AND ACCOUNT FALSE USE DETECTING/SUPPRESSING PROGRAM**

(30) Priority: 29.08.2005 JP 2005248043; 29.08.2005 JP 2005248044
(71) Applicant: DAIKIN INDUSTRIES, LTD., Osaka-shi, Osaka 530-8323 (JP)
(72) Inventor: HOUGA, Shozo, Kusatsu-shi Shiga 525-8526 (JP); KAWAI, Seiji, Kusatsu-shi Shiga 525-8526 (JP)
(74) Representative: Goddar, Heinz J.
(86) International application number: PCT/JP2006/316499
(87) International publication number: WO 2007/026580

(57) **Abstract**

An account abuse detection or prevention device, a data collection device, and an account abuse detection or prevention program, which are capable of promptly detecting or preventing abuse of an account.

An account abuse detection device (6) includes an access-amount-related value information receiving unit (11) and a detection unit (12). The access-amount-related value information receiving unit (11) receives access-amount-related value information from a management device (3). The management device (3) manages a specific account. The specific account is used when transmitting data from a plurality of data transmission devices (2) to a data collection device (5) via a public network. Access-amount-related value information is related to an access-amount-related value. The access-amount-related value is related to the amount of access by the public network (4) through the account. The detection unit (12) compares the access-amount-related value to a predetermined threshold value to detect abuse of the account.

## Description

### TECHNICAL FIELD

The present invention relates to an account abuse detection device, a data collection device, and an account abuse detection program, which detect abuse of an account used for authenticating access to a public network. In addition, the present invention relates to an account abuse prevention device and an account abuse prevention program.

### BACKGROUND ART

Conventionally, various methods to prevent abuse of an account used for authenticating access to a public network such as the internet have been proposed. An account management system according to Patent Document 1 creates an account ID after user personal information is reviewed, and provides the right to use system resources.
<Patent Document 1>
Japanese Patent Application Publication No. 2002-245010

### DISCLOSURE OF THE INVENTION

### <OBJECT TO BE ACHIEVED BY THE INVENTION>

However, when the information on the account and password is leaked to a third party without authorized access, unauthorized access to a public network such as the internet may be generated, charging a registered account holder with high access fee.

In addition, when the password is rewritten by the third party without authorization, there will be another problem that the registered account holder will not be able to receive the service of the public network.

An object of the present invention is to provide an account abuse detection device, a data collection device, and an account abuse detection program, which are capable of promptly detecting abuse of an account.

In addition, another object of the present invention is to provide an account abuse prevention device and an account abuse prevention program, which are capable of preventing abuse of an account.

### <MEANS TO ACHIEVE THE OBJECT>

An account abuse detection device according to a first aspect of the present invention includes an access-amount-related value information receiving unit and a detection unit. The access-amount-related value information receiving unit receives access-amount-related value information from a management device. The management device manages a specific account. The specific account is used when transmitting data from a plurality of data transmission devices to a data collection device via a public network. The access-amount-related value information is related to an access-amount-related value. The access-amount-related value is related to the amount of access to the public network through the account. The detection unit compares the access-amount-related value to a predetermined threshold value to detect abuse of the account.

Here, by using the access-amount-related value information received from the management device that manages the specific account, the detection unit compares the access-amount-related value to the predetermined threshold value to detect abuse of the account. Therefore, abuse of the account can be promptly detected from a change in the access-amount-related value.

An account abuse detection device according to a second aspect of the present invention is the account abuse detection device according to the first aspect of the present invention, wherein the threshold value is a difference threshold value for the difference in the access-amount-related value in each predetermined period. The detection unit compares the difference in the access-amount-related value in each predetermined period to the difference threshold value to detect abuse of the account.

Here, abuse of the account can be promptly detected from a change in the difference in the access-amount-related value in each predetermined period.

An account abuse detection device according to a third aspect of the present invention is the account abuse detection device according to the first aspect of the present invention, further including an access-amount-related value prediction unit. The access-amount-related value prediction unit determines a predicted trend value of the access-amount-related value from a history of the access-amount-related value. The threshold value is the predicted trend value. The detection unit compares the access-amount-related value to the predicted trend value to detect abuse of the account.

Here, abuse of the account can be promptly detected from the comparison between the access-amount-related value and the predicted trend value.

An account abuse detection device according to a fourth aspect of the present invention is the account abuse detection device according to the first aspect of the present invention, wherein the access-amount-related value is an access fee for using the public network.

Here, because the access-amount-related value is the access fee for using the public network, abuse of the account can be promptly detected from a change in the access fee.

An account abuse detection device according to a fifth aspect of the present invention is the account abuse detection device according to the fourth aspect of the present invention, further including an access fee estimation unit. The access fee estimation unit estimates an access fee from the amount of incoming data in each predetermined period received by the data collection device. The threshold value is an estimated total value. The estimated total value is an estimated value of the total of the access fee determined by the access fee estimation unit. The detection unit compares the access fee in each predetermined period to the estimated total value to detect abuse.

Here, the estimated total value determined by estimating the access fee from the amount of incoming data in the data collection device is used as the threshold value, and thereby abuse of the account can be promptly detected from the comparison between the access fee and the estimated total value.

An account abuse detection device according to a sixth aspect of the present invention is the account abuse detection device according to the fourth aspect of the present invention, further including an access fee difference estimation unit. The access fee difference estimation unit estimates the difference in the access fee in each predetermined period from the amount of incoming data in each predetermined period received by the data collection device. The threshold value is an estimated difference value. The estimated difference value is an estimated value of the difference in the access fee determined by the access fee difference estimation unit. The detection unit compares the difference in the access fee in each predetermined period to the estimated difference value to detect abuse.

Here, the estimated difference value determined by estimating the difference in the access fee from the amount of incoming data in the data collection device is used as the threshold value, and thereby abuse of the account can be promptly detected from the comparison between the difference in the access fee and the estimated difference value.

An account abuse detection device according to a seventh aspect of the present invention is the account abuse detection device according to the fourth aspect of the present invention, further including an access fee estimation unit and an access fee difference estimation unit. The access fee estimation unit estimates the access fee from the amount of incoming data in each predetermined period received by the data collection device. The access fee difference estimation unit estimates the difference in the access fee in each predetermined period from the amount of incoming data in each predetermined period received by the data collection device. The threshold value is an estimated fee ratio of the estimated difference value to the estimated total value. The estimated difference value is an estimated value of the difference in the access fee determined by the access fee difference estimation unit. The estimated total value is an estimated value of the total of the access fee determined by the access fee estimation unit. The detection unit compares the fee ratio of the difference in the access fee in each predetermined period to the total of the access fee to the estimated fee ratio to detect abuse.

Here, the estimated fee ratio is used as the threshold value. The estimated fee ratio is a ratio of the estimated difference value determined by estimating the difference in the access fee from the amount of incoming data in the data collection device to the estimated total value determined by estimating the total of the access fee. The fee ratio of the difference in the access fee to the total of the access fee is compared to the estimated fee ratio. Accordingly, abuse of the account can be promptly detected.

An account abuse detection device according to an eighth aspect of the present invention is the account abuse detection device according to the fourth aspect of the present invention, further including an access fee prediction unit. The access fee prediction unit determines a predicted fee trend value of the access fee from a history of the amount of incoming data in each predetermined period received by the data collection device. The threshold value is the predicted fee trend value. The detection unit compares the access fee in each predetermined period to the predicted fee trend value to detect abuse of the account.

Here, abuse of the account can be promptly detected from the comparison between the access fee in each predetermined period and the predicted fee trend value.

An account abuse detection device according to a ninth aspect of the present invention is the account abuse detection device according to any one of the first through eighth aspects of the present invention, wherein each data transmission device is an equipment monitoring device.

Here, because the equipment monitoring devices are used as the data transmission devices, the output data of the equipment monitoring devices are periodically transmitted to the data collection device in a predetermined format. Further, the transmission amount of data is fixed in advance. Therefore, abuse can be promptly detected.

An account abuse detection device according to a tenth aspect of the present invention is the account abuse detection device according to the first aspect of the present invention, wherein the threshold value is a data collection device side access-amount-related value. The data collection device side access-amount-related value is related to the amount of access to the public network by the data collection device through the account. The detection unit compares a management device side access-amount-related value to the data collection device side access-amount-related value to detect abuse of the account. The management device side access-amount-related value is related to the amount of access to the public network by the management device through the account.

Here, abuse of the account can be promptly detected from a relative change between the access-amount-related value on the management device side and the access-amount-related value on the data collection device side.

A data collection device according to an eleventh aspect of the present invention includes an access-amount-related value information receiving function and a detection function. The access-amount-related value information receiving function is a function to receive access-amount-related value information from a management device. The management device manages a specific account. The specific account is used when transmitting data from a plurality of data transmission devices to a data collection device via a public network. The access-amount-related value information is related to an access-amount-related value. The access-amount-related value is related to the amount of access to the public network through the account. The detection function is a function to compare the access-amount-related value to a predetermined threshold value to detect abuse of the account.

Here, the data collection device has a function to use the access-amount-related value information received from the management device that manages the specific account to compare the access-amount-related value to the predetermined threshold value to detect abuse of the account. Therefore, abuse of the account can be promptly detected from a change in the access-amount-related value.

An account abuse detection program according to a twelfth aspect of the present invention includes an access-amount-related value information receiving step and a detection step. The access-amount-related value information receiving step is a step of receiving access-amount-related value information from a management device. The management device manages a specific account. The specific account is used when transmitting data from a plurality of data transmission devices to a data collection device via a public network. The access-amount-related value information is related to an access-amount-related value. The access-amount-related value is related to the amount of access to the public network through the account. The detection step is a step of comparing the access-amount-related value to a predetermined threshold value to detect abuse of the account.

Here, the account abuse detection program has a step of using the access-amount-related value information received from the management device that manages the specific account to compare the access-amount-related value to the predetermined threshold value to detect abuse of the account. Therefore, abuse of the account can be promptly detected from a change in the access-amount-related value, by executing this program by the data collection device.

An account abuse prevention device according to a thirteenth aspect of the present invention includes an account memory unit, an account selection unit, a password setting information transmission unit, a password rewriting unit, and a password changing unit. The account memory unit stores a first account, a second account, and passwords for each account. The first account, the second account, and the passwords for each account are used when transmitting data from a plurality of data transmission devices to a data collection device via a public network. An account selection unit alternately selects between the first account and the second account in each predetermined period. When access is made by the data transmission device through one of the first account or the second account selected by the account selection unit, the password setting information transmission unit transmits password setting information on a setting condition of the password for the other one of the first account or the second account to the data transmission device. For a management device, the password rewriting unit rewrites the password for the other one of the first account or the second account every time the predetermined period elapses. The management device manages the first account, the second account, and the passwords for each account. The password changing unit changes the password for one of the first account and the second account, of the passwords stored in the account memory unit, every time the predetermined period elapses.

Here, the account selection unit alternately selects between the first account and the second account in each predetermined period. Further, the password changing unit changes the password for one of the first account and the second account, of the passwords stored in the account memory unit, every time the predetermined period elapses. Accordingly, the two accounts can be alternately used in each predetermined period, and abuse of the account can be prevented.

An account abuse prevention device according to a fourteenth aspect of the present invention includes an account memory unit, a password changing unit, a password setting information transmission unit, and a password rewriting unit. The account memory unit stores a plurality of accounts and passwords for each account in a manner corresponding to each data transmission device. The plurality of accounts and the passwords for each account are used when transmitting data from a plurality of data transmission devices to a data collection device via a public network. The password changing unit changes each password for the plurality of accounts in each predetermined period. When access is made by the data transmission device, the password setting information transmission unit transmits the password setting information on the setting condition of the password to the data transmission device. For the management device, the password rewriting unit rewrites the passwords every time the predetermined period elapses. The management device manages the plurality of accounts and the passwords for each account.

Here, the password changing unit changes the password for each account corresponding to each data transmission device in each predetermined period, and thereby abuse of the account can be prevented.

An account abuse prevention device according to a fifteenth aspect of the present invention is the account abuse prevention device according to the thirteenth or fourteenth aspect of the present invention, further including a management database. The management database is a database for managing a transmission state of the password setting information.

Here, the transmission state of the password setting information can be managed by the management database.

An account abuse prevention device according to a sixteenth aspect of the present invention is the account abuse prevention device according to the fifteenth aspect of the present invention, wherein the management database stores a status of the transmission state of the password setting information.

Here, the status of the transmission state of the password setting information can be managed.

An account abuse prevention device according to a seventeenth aspect of the present invention is the account abuse prevention device according to the fifteenth aspect of the present invention, wherein the management database is integrated with the account memory unit.

Here, because the management database is integrated with the account memory unit, the accounts and the transmission state of the password setting information can be collectively managed.

An account abuse prevention program according to an eighteenth aspect of the present invention includes an account selecting step, a password setting information transmitting step, a password rewriting step, and a password changing step. A first account and a second account are used when transmitting data from a plurality of data transmission devices to a data collection device via a public network. In the account selecting step, the first account and the second account are alternately selected in each predetermined period. In the password setting information transmission step, when access is made by the data transmission device through one of the first account or the second account selected, password setting information on a setting condition of a password for the other one of the first account or the second account is transmitted to the data transmission device. In the password rewriting step, the password for the other one of the first account or the second account is rewritten for a management device every time the predetermined period elapses. The management device manages the first account, the second account, and the passwords for each account. In the password changing step, the password for one of the first account and the second account is changed every time the predetermined period elapses.

Here, in the account selecting step, the first account and the second account are alternately selected in each predetermined period. Further, in the password changing step, the password for one of the first account and the second account, of the passwords stored in the account memory unit, is changed every time the predetermined period elapses. Therefore, the two accounts can be alternately used in the data collection device in each predetermined period, and abuse of the account can be prevented.

### <EFFECT OF THE INVENTION>

According to the first aspect of the present invention, abuse of the account can be promptly detected from a change in the access-amount-related value.

According to the second aspect of the present invention, abuse of the account can be promptly detected from a change in the difference in the access-amount-related value in each predetermined period.

According to the third aspect of the present invention, abuse of the account can be promptly detected from the comparison between the access-amount-related value and the predicted trend value.

According to the fourth aspect of the present invention, abuse of the account can be promptly detected from a change in the access fee.

According to the fifth aspect of the present invention, abuse of the account can be promptly detected from the comparison between the access fee and the estimated total value.

According to the sixth aspect of the present invention, abuse of the account can be promptly detected from the comparison between the difference in the access fee and the estimated difference value.

According to the seventh aspect of the present invention, abuse of the account can be promptly detected from the comparison between the fee ratio of the difference in the access fee to the total of the access fee and the estimated fee ratio.

According to the eighth aspect of the present invention, abuse of the account can be promptly detected from the comparison between the access fee in each predetermined period and the predicted fee trend value.

According to the ninth aspect of the present invention, abuse can be promptly detected by using the transmission amount of output data from the equipment monitoring devices.

According to the tenth aspect of the present invention, abuse of the account can be promptly detected from a relative change between the access-amount-related value on management device side and the access-amount-related value on the data collection device side.

According to the eleventh aspect of the present invention, abuse of the account can be promptly detected from a change in the access-amount-related value.

According to the twelfth aspect of the present invention, abuse of the account can be promptly detected from a change in the access-amount-related value.

According to the thirteenth aspect of the present invention, abuse of the account can be prevented by alternately using the two accounts in each predetermined period.

According to the fourteenth aspect of the present invention, abuse of the account can be prevented by changing the password for each account in each predetermined period.

According to the fifteenth aspect of the present invention, the transmission state of the password setting information can be managed.

According to the sixteenth aspect of the present invention, a status of the transmission state of the password setting information can be managed.

According to the seventeenth aspect of the present invention, the accounts and the transmission state of the password setting information can be collectively managed.

According to the eighteenth aspect of the present invention, abuse of the account can be prevented by alternately using the two accounts in each predetermined period.

### BRIEF DESCRIPTION OF THE DRAWINGS

Figure 1 is a diagram of a data collection device with a built-in account abuse detection device of the present invention and an equipment management system including the same.
Figure 2 is a diagram of an account abuse detection device according to a first embodiment of the present invention.
Figure 3 is a graph showing an access fee and the difference in the access fee in the first embodiment of the present invention.
Figure 4 is a diagram of an account abuse detection device according to a second embodiment of the present invention.
Figure 5 is a graph showing a history of an access fee and a predicted trend value in the second embodiment of the present invention.
Figure 6 is a diagram of an account abuse detection device according to a third embodiment of the present invention.
Figure 7 is a diagram of an account abuse detection device according to a fourth embodiment of the present invention.
Figure 8 is a diagram of an account abuse detection device according to a fifth embodiment of the present invention.
Figure 9 is a diagram of an account abuse detection device according to a sixth embodiment of the present invention.
Figure 10 is a diagram of an equipment management system including an account abuse prevention device according to a seventh embodiment of the present invention.
Figure 11 is a diagram of an account management database in Figure 10.
Figure 12 is a diagram of a download management database in Figure 10.
Figure 13 is a time chart chronologically showing the operation of the account abuse prevention device in Figure 10.
Figure 14 is a flowchart showing the procedure of a method to obtain an account by a data collection device and the account abuse prevention device in Figure 10.
Figure 15 is a flowchart showing the operation procedure of the account abuse prevention device in Figure 10.
Figure 16 is a diagram of an equipment management system including an account abuse prevention device according to an eighth embodiment of the present invention.
Figure 17 is a configuration of an account management database in Figure 16.
Figure 18 is a configuration of a download management database in Figure 16.
Figure 19 is a time chart chronologically showing the operation of the account abuse prevention device in Figure 16.
Figure 20 is a flowchart showing the operation procedure of the account abuse prevention device in Figure 16.
Figure 21 is a configuration of an account abuse detection device included in an account abuse prevention device according to a ninth embodiment of the present invention.
Figure 22 is a flowchart showing the procedure of account abuse detection by using an account abuse detection device in Figure 21.
Figure 23 is a flowchart showing the procedure of a method to set up account information when an equipment monitoring device according to a tenth embodiment of the present invention is newly added.

### DESCRIPTION OF THE REFERENCE NUMBERS

- 1: Equipment management system
- 2: Equipment monitoring device
- 3: Internet management device
- 4: Internet
- 5: Data collection device
- 6: Account abuse detection device
- 11: Access-amount-related value information receiving unit
- 12: Detection unit
- 13: Access-amount-related value prediction unit
- 14: Access fee estimation unit
- 15: Access fee difference estimation unit
- 16: Access fee prediction unit
- 46, 56, 66, 76, 86: Account abuse detection device
- 101: Equipment management system
- 102: Equipment monitoring device
- 103: Internet management device
- 104: Internet
- 105: Data collection device
- 106, 126: Account management database
- 107, 127: Download management database
- 108, 128: Account abuse prevention device
- 109: Account selection unit
- 110, 130: Password setting information transmission unit
- 111, 131: Password rewriting unit
- 112, 132: Password changing unit

### BEST MODE FOR CARRYING OUT THE INVENTION

### <FIRST EMBODIMENT>

### <ENTIRE CONFIGURATION OF THE EQUIPMENT MANAGEMENT SYSTEM 1>

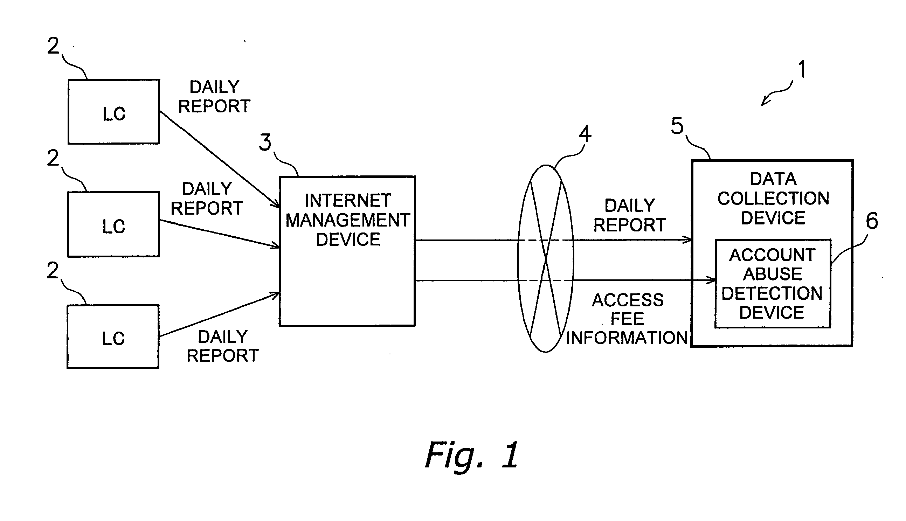

Figure 1 shows an equipment management system 1 for remotely monitoring equipment such as an air conditioner, which is the target equipment to be managed by a plurality of equipment monitoring devices 2. The equipment management system 1 includes the plurality of equipment monitoring devices 2, an internet management device 3, and a data collection device 5.

The plurality of equipment monitoring devices 2 are local controllers (LC) that monitor the operation condition, failure condition, and the like of the target equipment to be managed such as the air conditioner, and transmit such monitoring data to the data collection device 5 via a public network which is an internet 4. The monitoring data to be transmitted are reported at least once every day as a daily report to the data collection device 5 (daily report). In addition, output data from the equipment monitoring devices 2 are periodically transmitted to the data collection device 5 in a predetermined format. Further, the transmission amount of data is fixed in advance.

The internet management device 3 includes a computer of an internet service provider (ISP) and the like. The internet management device 3 manages a specific account that is used when transmitting the monitoring data from the plurality of equipment monitoring devices 2 to the data collection device 5 via the internet 4. The plurality of equipment monitoring devices 2 can access to the data collection device 5 through the account that is used in a shared manner.

The data collection device 5 collects and manages the monitoring data transmitted from the plurality of equipment monitoring devices 2. In addition, the data collection device 5 has a built-in the account abuse detection device 6 (described later).

### <CONFIGURATION OF ACCOUNT ABUSE DETECTION DEVICE 6>

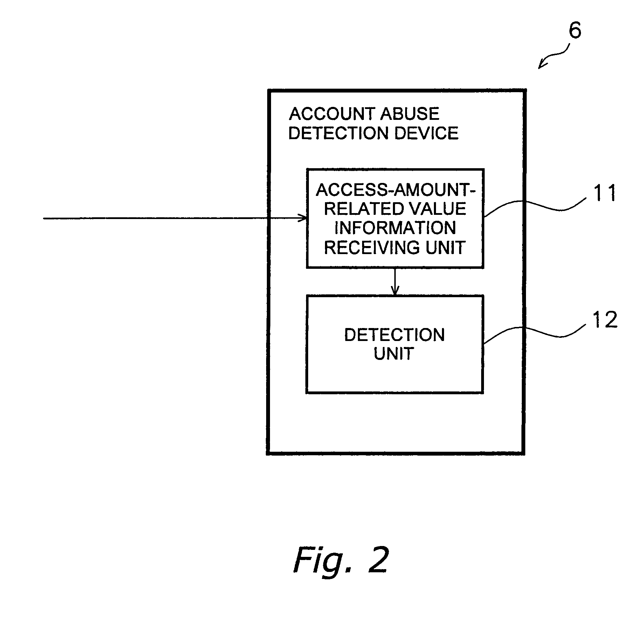

As shown in Figure 2, the account abuse detection device 6 includes an access-amount-related value information receiving unit 11 and a detection unit 12.

The access-amount-related value information receiving unit 11 receives access-amount-related value information from the internet management device 3. The access-amount-related value information received from the internet management device 3 is information on an access-amount-related value regarding the amount of access to the internet 4 by the internet management device 3 through the account. The access-amount-related value is an access fee for using the internet 4.

The detection unit 12 compares the access-amount-related value, i.e., access fee for using the internet 4 by the internet management device 3 through the account, to a predetermined threshold value to detect abuse of the account.

In addition, in a first embodiment, the predetermined threshold value is a difference threshold value for the difference in the access-amount-related value in each predetermined period (for example, one day). The detection unit 12 compares the difference in the access-amount-related value in each predetermined period to the difference threshold value, and thereby detects abuse of the account. Accordingly, abuse of the account can be promptly detected from a change in the difference in the access-amount-related value in each predetermined period.

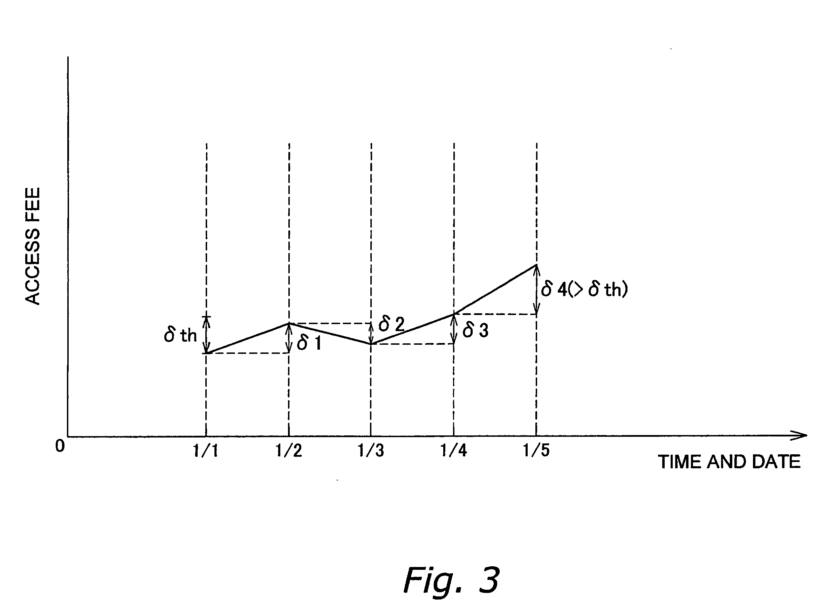

Specifically, as shown in the graph in Figure 3, the detection unit 12 uses a difference threshold value δth of the access fee for using the internet 4 by the internet management device 3 as a threshold value, and compares the differences δ1, δ2, δ3, --- in the daily access fee to the difference threshold value δth. When the difference in the access fee is greater than the difference threshold value, it is determined that abuse of the account is found.

When abuse of the account is detected by the account abuse detection device 6, the data collection device 5 just needs to transmit information on the detection of abuse of the account, a situation of abuse, and the like to the internet management device 3 and a personal computer owned by an account holder.

The actual access fee for using the internet 4 when the equipment monitoring devices 2 are used will be averaged out as the number of equipment monitoring devices 2 increases. Therefore, the difference threshold value decreases, and the probability of misdetection also decreases.

### <CHARACTERISTICS OF THE FIRST EMBODIMENT>

### (1)

With the account abuse detection device 6 in the first embodiment, by using the access-amount-related value information received from the internet management device 3 that manages the specific account, the detection unit 12 compares the access-amount-related value to the predetermined threshold value to detect abuse of the account. Therefore, abuse of the account can be promptly detected from a change in the access-amount-related value.

### (2)

With the account abuse detection device 6 in the first embodiment, the detection unit 12 compares the difference in the access-amount-related value in each predetermined period to the difference threshold value to detect abuse of the account. Accordingly, abuse of the account can be promptly detected from a change in the difference in the access-amount-related value in each predetermined period.

### (3)

With the account abuse detection device 6 in the first embodiment, because the access-amount-related value is the access fee for using the internet 4, abuse of the account can be promptly detected from a change in the access fee.

### (4)

In the first embodiment, because the equipment monitoring devices 2 are used as the data transmission devices, the output data of the equipment monitoring devices 2 are periodically transmitted to the data collection device 5 in a predetermined format. Further, the transmission amount of data is fixed in advance. Therefore, abuse can be promptly detected.

### <ALTERNATIVE EMBODIMENT OF THE FIRST EMBODIMENT>

### (A)

In the first embodiment, the access fee for using the internet 4 is used as the access-amount-related value; however, the present invention is not limited thereto. Various types of access-amount-related value may be used as long as it is a value related to the amount of access to a public network such as the internet 4.

### (B)

In addition, in the first embodiment, the internet 4 is used as an example of the public network; however, the present invention is not limited thereto. In other words, the public network in the present invention is a communication network that uses a public line, and it is a broad concept that includes the internet and the like. Therefore, the account abuse detection device of the present invention may be applied to a different type of public network other than the internet 4.

### (C)

In the first embodiment described above, the account abuse detection device 6 built in the data collection device 5 is used to detect abuse of the account. However, the present invention is not limited thereto. The data collection device 5 itself may be equipped with the function of the account abuse detection device 6. In this case, the data collection device 5 is equipped with an access-amount-related value information receiving function and a detection function. The access-amount-related value information receiving function receives the access-amount-related value information from the internet management device 3. The detection function compares the access-amount-related value to a predetermined threshold value to detect abuse of the account.

In this case, because the data collection device 5 has the function in which the access-amount-related value information received from the internet management device 3 that manages the specific account is used to compare the access-amount-related value to the predetermined threshold value to detect abuse of the account, abuse of the account can be promptly detected from a change in the access-amount-related value.

### (D)

In the first embodiment described above, the account abuse detection device 6 built in the data collection device 5 is used to detect abuse of the account. However, the present invention is not limited thereto. The data collection device 5 may perform the account abuse detection program, and thereby the data collection device 5 itself may perform the function of the account abuse detection device 6. In this case, the account abuse detection program includes an access-amount-related value information receiving step and a detection step. In the access-amount-related value information receiving step, the access-amount-related value information is received by the internet management device 3. In the detection step, the access-amount-related value is compared to a predetermined threshold value to detect abuse of the account.

In this case, because the account abuse detection program has the step of using the access-amount-related value information received from the internet management device 3 that manages the specific account to compare between the access-amount-related value and the predetermined threshold value to detect abuse of the account, abuse of the account can be promptly detected from a change in the access-amount-related value by performing the account abuse detection program by the data collection device 5.

### <SECOND EMBODIMENT>

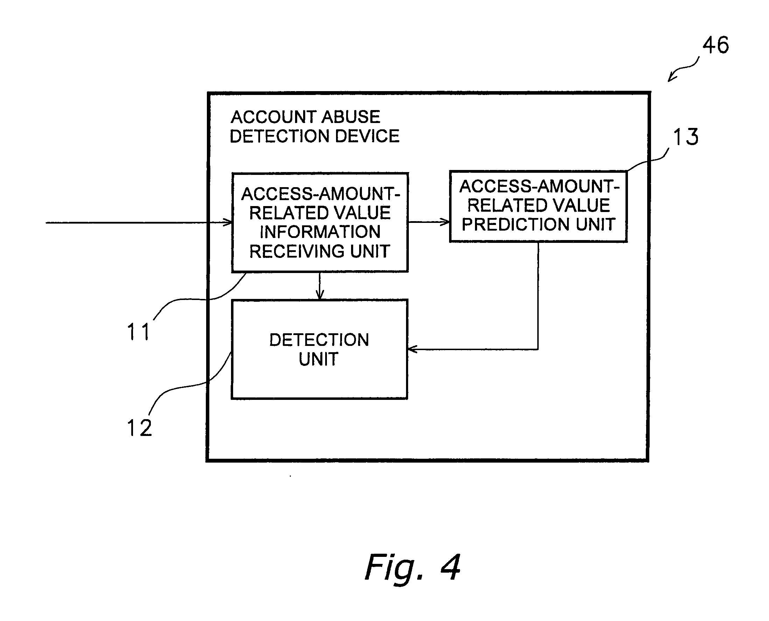

As shown in Figure 4, an account abuse detection device 46 in a second embodiment includes the access-amount-related value information receiving unit 11 and the detection unit 12 in the first embodiment, and further includes an access-amount-related value prediction unit 13. The account abuse detection device 46 is built in the data collection device 5 of the equipment management system 1 in Figure 1, as is the case with the account abuse detection device 6 in the first embodiment.

The access-amount-related value prediction unit 13 determines a predicted trend value of an access-amount-related value from a history of an access-amount-related value. The predicted trend value is used as a threshold value.

The detection unit 12 compares the access-amount-related value to the predicted trend value to detect abuse of an account. Accordingly, abuse of the account can be promptly detected.

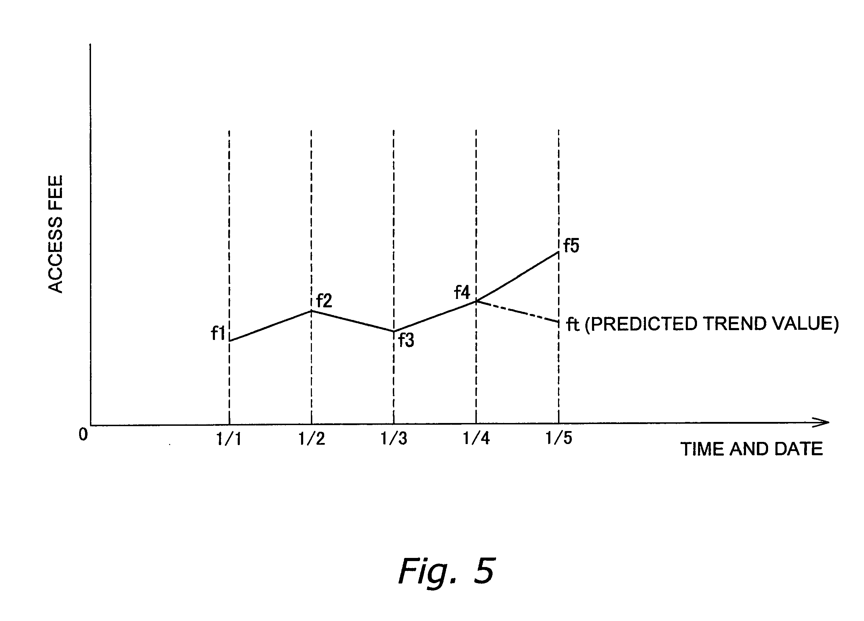

Specifically, as shown in the graph in Figure 5, the access-amount-related value prediction unit 13 determines a predicted trend value ft of an access fee for tomorrow from values f1 to f4 which each indicate a daily history of the access fee for using the internet 4 by the internet management device 3. The detection unit 12 uses this predicted trend value ft as a threshold value. The detection unit 12 compares an access fee f5 for using the internet 4 which is generated when the internet management device 3 actually accessed to the internet 4 to the predicted trend value ft to detect abuse of the account. Here, the detection unit 12 determines that abuse of the account is detected when the access fee f5 becomes a value that exceeds the predicted trend value ft beyond a predetermined allowable range.

Also in this case, the actual values in the history of the access fee for using the internet when the equipment monitoring devices 2 are used will be averaged out as the number of equipment monitoring devices 2 increases. Therefore, the predicted trend value becomes substantially same as the daily access fee in the history of the past, and thus the probability of misdetection decreases.

### <CHARACTERISTICS OF THE SECOND EMBODIMENT>

### (1)

The account abuse detection device 46 in the second embodiment further includes the access-amount-related value prediction unit 13. The access-amount-related value prediction unit 13 determines the predicted trend value of the access-amount-related value from the history of the access-amount-related value. The predicted trend value is used as the threshold value. Accordingly, the detection unit 12 can promptly detect abuse of the account from the comparison between the access-amount-related value and the predicted trend value.

### <THIRD EMBODIMENT>

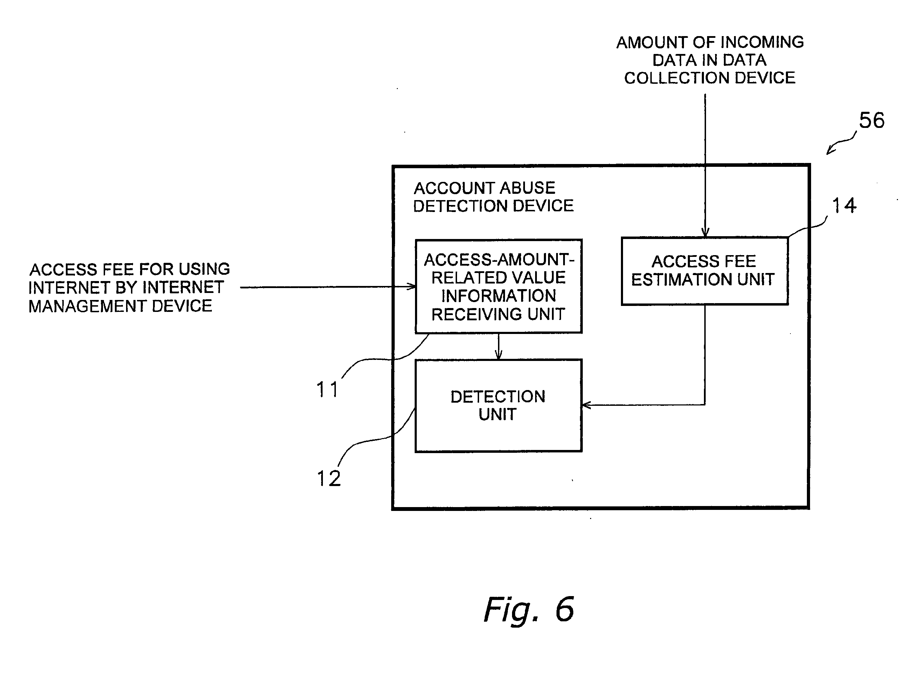

As shown in Figure 6, an account abuse detection device 56 in a third embodiment includes the access-amount-related value information receiving unit 11 and the detection unit 12 in the first embodiment and further includes an access fee estimation unit 14.

The access-amount-related value information receiving unit 11 receives, as access-amount-related value information, information on an access fee for using the internet 4 by the internet management device 3, from the internet management device 3.

In the typical use condition of the data collection device 5, there is a correlation between the amount of incoming data and the access fee. Consequently, the access fee estimation unit 14 estimates the access fee by using a map of the correlation between the amount of incoming data and the access fee, from the amount of incoming data in each predetermined period (for example, one day) received by the data collection device 5. An estimated total value, which is an estimated value of the total of the access fee determined by the access fee estimation unit 14, is used as a threshold value.

The detection unit 12 compares the access fee in each predetermined period to the estimated total value to detect abuse. The detection unit 12 determines that abuse of an account is detected when the access fee becomes a value that exceeds the estimated total value beyond a predetermined allowable range.

### <CHARACTERISTICS OF THE THIRD EMBODIMENT>

### (1)

Because the account abuse detection device 56 in the third embodiment further includes the access fee estimation unit 14, by using the estimated total value determined by estimating the access fee from the amount of incoming data in the data collection device 5 as the threshold value, abuse of the account can be promptly detected from the comparison between the access fee and the estimated total value. In addition, because the access fee is estimated from the amount of incoming data, even when the number of equipment monitoring devices 2 is small, the probability of misdetection is small.

### (2)

With the account abuse detection device 56 in the third embodiment, the threshold value is the estimated total value of the access fee determined from the amount of incoming data in the data collection device 5. In other words, it is the access-amount-related value on the data collection device 5 side. The access-amount-related value on the data collection device 5 side is related to the amount of access to the internet 4 by the data collection device 5 through the account. In other words, the detection unit 12 compares the access-amount-related value (access fee) on the internet management device 3 side to the access-amount-related value (estimated total value) on the data collection device 5 side to detect abuse of the account. The access-amount-related value on the internet management device 3 side is related to the amount of access to the internet 4 by the internet management device 3 through the account.

Therefore, abuse of the account can be promptly detected from a relative change between the access-amount-related value on the internet management device 3 side and the access-amount-related value on the data collection device 5 side.

### <FOURTH EMBODIMENT>

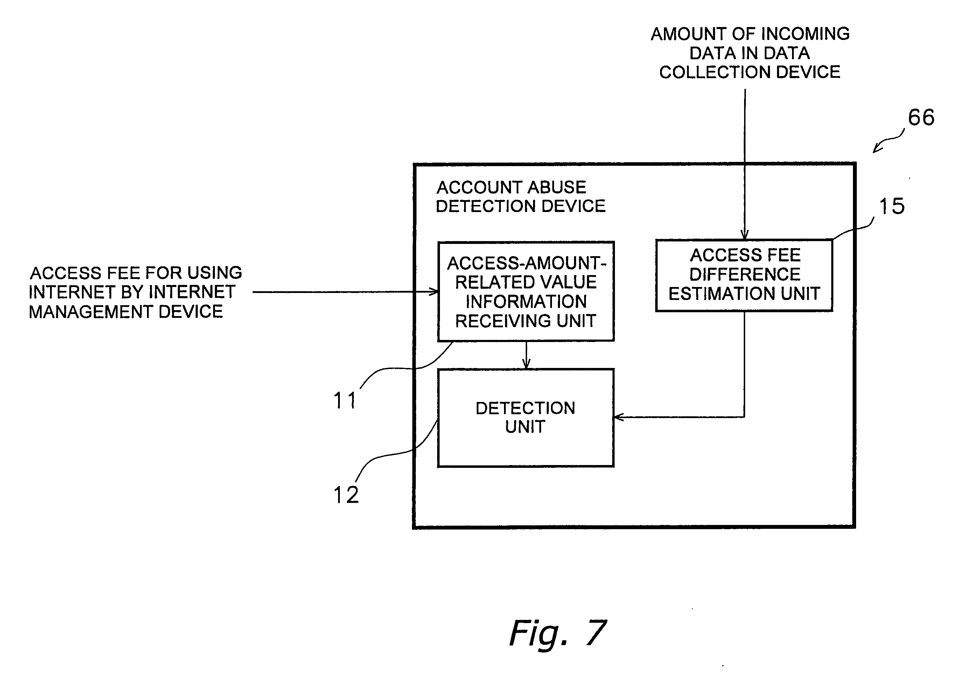

As shown in Figure 7, an account abuse detection device 66 according to a fourth embodiment includes the access-amount-related value information receiving unit 11 and the detection unit 12 in the first embodiment, and further includes an access fee difference estimation unit 15.

The access-amount-related value information receiving unit 11 receives, as access-amount-related value information, information on an access fee for using the internet 4 by the internet management device 3, from the internet management device 3.

The access fee difference estimation unit 15 estimates the difference in the access fee in each predetermined period from the amount of incoming data in each predetermined period (for example, one day) received by the data collection device 5. An estimated difference value is used as a threshold value. The estimated difference value is an estimated value of the difference in the access fee determined by the access fee difference estimation unit 15.

The detection unit 12 compares the difference in the access fee in each predetermined period to the estimated difference value to detect abuse. Here, the detection unit 12 determines that abuse of an account is detected when the access fee becomes a value that exceeds the estimated difference value beyond a predetermined allowable range.

### <CHARACTERISTICS OF THE FOURTH EMBODIMENT>

### (1)

Because the account abuse detection device 66 in the fourth embodiment further includes the access fee difference estimation unit 15, by using the estimated difference value determined by estimating the difference in the access fee from the amount of incoming data in the data collection device 5 as the threshold value, abuse of the account can be promptly detected from the comparison between the difference in the access fee and the estimated difference value.

### (2)

With the account abuse detection device 66 in the fourth embodiment, the threshold value is the estimated difference value determined from the amount of incoming data in the data collection device 5. In other words, it is the access-amount-related value on the data collection device 5 side. The access-amount-related value on the data collection device 5 side is related to the amount of access to the internet 4 by the data collection device 5 through the account. In other words, the detection unit 12 compares the access-amount-related value (access fee) on the internet management device 3 side to the access-amount-related value (estimated difference value) on the data collection device 5 side to detect abuse of the account. The access-amount-related value on the internet management device 3 side is related to the amount of access to the internet 4 by the internet management device 3 through the account.

Therefore, abuse of the account can be promptly detected from a relative change between the access-amount-related value on the internet management device 3 side and the access-amount-related value on the data collection device 5 side.

### <FIFTH EMBODIMENT>

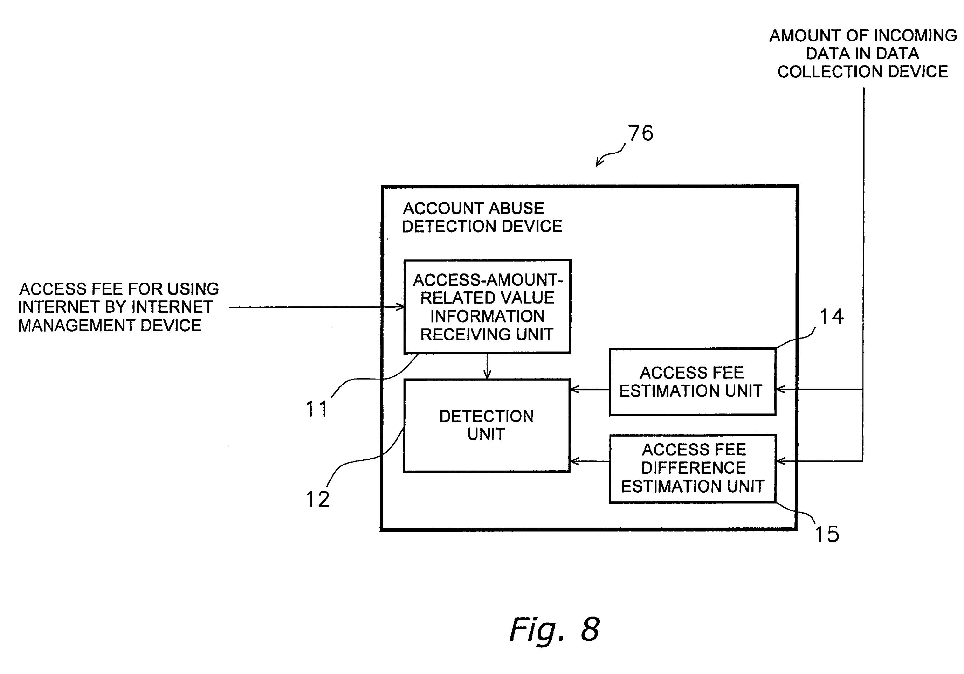

As shown in Figure 8, an account abuse detection device 76 according to a fifth embodiment includes the access-amount-related value information receiving unit 11 and the detection unit 12 in the first embodiment, and further includes the access fee estimation unit 14 and the access fee difference estimation unit 15.

The access-amount-related value information receiving unit 11 receives, as access-amount-related value information, information on an access fee for using the internet 4 by the internet management device 3, from the internet management device 3.

As in the third embodiment, the access fee estimation unit 14 estimates an access fee based on the amount of incoming data in each predetermined period received by the data collection device 5.

As in the fourth embodiment, the access fee difference estimation unit 15 estimates the difference in the access fee in each predetermined period from the amount of incoming data in each predetermined period received by the data collection device 5.

In the fifth embodiment, an estimated fee ratio of an estimated difference value to an estimated total value is used as a threshold value. The estimated difference value is an estimated value of the difference in the access fee determined by the access fee difference estimation unit 15. The estimated total value is an estimated value of the total of the access fee determined by the access fee estimation unit 14.

The detection unit 12 compares the fee ratio of the difference in the access fee in each predetermined period (for example, one day) to the total of the access fee to the estimated fee ratio to detect abuse. Here, the detection unit 12 determines that abuse of an account is detected when the fee ratio becomes a value that exceeds the estimated fee ratio beyond a predetermined allowable range.

### <CHARACTERISTICS OF THE FIFTH EMBODIMENT>

### (1)

Because the account abuse detection device 76 in the fifth embodiment further includes the access fee estimation unit 14 and the access fee difference estimation unit 15, by using, as the threshold value, the estimated fee ratio of the estimated difference value determined by estimating the difference in the access fee from the amount of incoming data in the data collection device 5 to the estimated total value determined by estimating the total of the access fee, the fee ratio of the difference in the access fee to the total access fee is compared to the estimated fee ratio. Accordingly, abuse of the account can be promptly detected.

### (2)

With the account abuse detection device 76 in the fifth embodiment, the threshold value is the estimated fee ratio determined from the amount of incoming data in the data collection device 5. In other words, it is an access-amount-related value on the data collection device 5 side. The access-amount-related value on the data collection device 5 side is related to the amount of access to the internet 4 by the data collection device 5 through the account. In other words, the detection unit 12 compares the access-amount-related value (fee ratio of the difference in the access fee to the total of the access fee) on the internet management device 3 side to the access-amount-related value (estimated fee ratio) on the data collection device 5 side to detect abuse of the account. The access-amount-related value on the internet management device 3 side is related to the amount of access to the internet 4 by the internet management device 3 through the account.

Therefore, abuse of the account can be promptly detected from a relative change between the access-amount-related value on the internet management device 3 side and the access-amount-related value on the data collection device 5 side.

### <SIXTH EMBODIMENT>

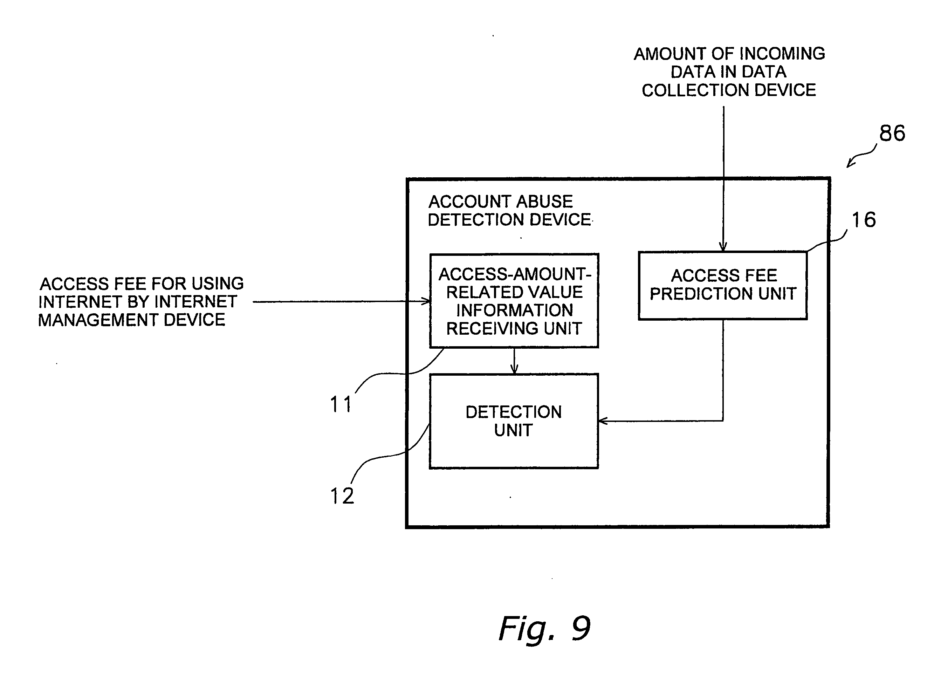

As shown in Figure 9, an account abuse detection device 86 in a sixth embodiment includes the access-amount-related value information receiving unit 11 and the detection unit 12 in the first embodiment, and further includes an access fee prediction unit 16.

The access-amount-related value information receiving unit 11 receives, as access-amount-related value information, information on an access fee for using the internet 4 by the internet management device 3, from the internet management device 3.

The access fee prediction unit 16 determines a predicted fee trend value of the access fee from a history of the amount of incoming data in each predetermined period received by the data collection device 5. The predicted fee trend value is used as a threshold value.

The detection unit 12 compares the access fee in each predetermined period (for example, one day) to the predicted fee trend value to detect abuse of the account. Here, the detection unit 12 determines that abuse of an account is detected when the access fee becomes a value that exceeds the predicted fee trend value beyond a predetermined allowable range.

### <CHARACTERISTICS OF THE SIXTH EMBODIMENT>

### (1)

Because the account abuse detection device 86 in the sixth embodiment further includes the access fee prediction unit 16, abuse of the account can be promptly detected from the comparison between the access fee in each predetermined period and the predicted fee trend value.

### (2)

With the account abuse detection device 86 in the sixth embodiment, the threshold value is the predicted fee trend value determined from the amount of incoming data in the data collection device 5. In other words, it is an access-amount-related value on the data collection device 5 side. The access-amount-related value on the data collection device 5 side is related to the amount of access to the internet 4 by the data collection device 5 through the account. In other words, the detection unit 12 compares the access-amount-related value (access fee) on the internet management device 3 side to the access-amount-related value (predicted fee trend value) on the data collection device 5 side to detect abuse of the account. The access-amount-related value on the internet management device 3 side is related to the amount of access to the internet 4 by the internet management device 3 through the account.

Therefore, abuse of the account can be promptly detected from a relative change between the access-amount-related value on the internet management device 3 side and the access-amount-related value on the data collection device 5 side.

### <SEVENTH EMBODIMENT>

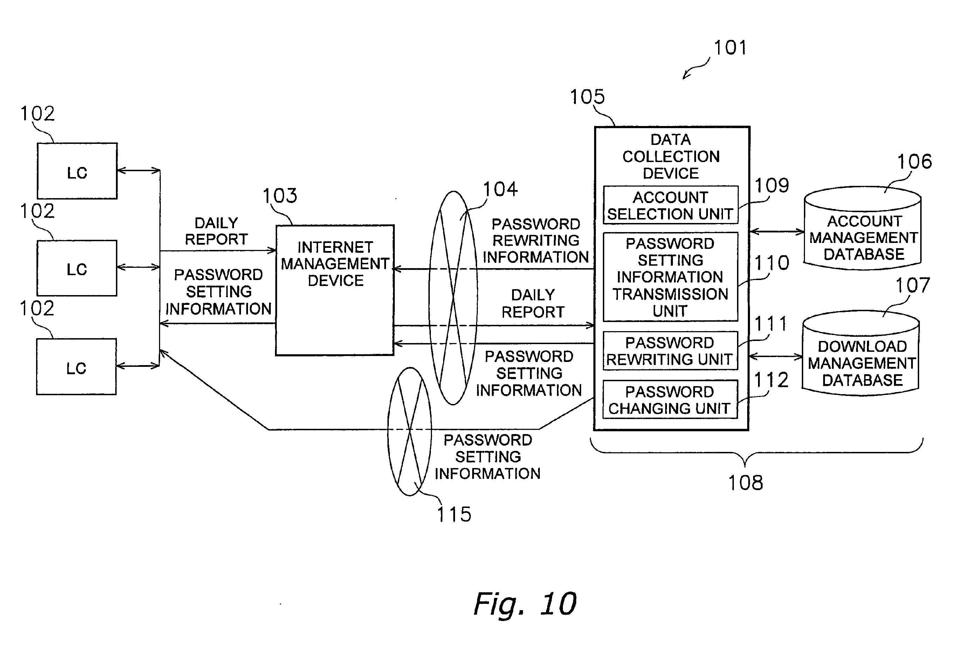

Figure 10 shows an equipment management system 101 for remotely monitoring equipment such as an air conditioner and the like, which are the target equipment to be managed by a plurality of equipment monitoring devices 102. The equipment management system 101 includes the plurality of equipment monitoring devices 102, an internet management device 103, and a data collection device 105.

The plurality of equipment monitoring devices 102 are local controllers (LC) that monitor the operation condition, failure condition, and the like of the target equipment to be managed such as the air conditioner, and transmit such monitoring data to the data collection device 105 via a public network such as the internet 104. The monitoring data to be transmitted are reported at least once every day as a daily report to the data collection device 105 (daily report).

The internet management device 103 includes a computer of an internet service provider (ISP) and the like. The internet management device 103 manages specific accounts that are used when transmitting the monitoring data from the plurality of equipment monitoring devices 102 to the data collection device 105 via the internet 104. The specific accounts are a first account and a second account that are used in a shared manner. The plurality of equipment monitoring devices 102 can access to the data collection device 105 through the first account and the second account that are shared.

The data collection device 105 collects and manages the monitoring data transmitted from the plurality of equipment monitoring devices 102. In addition, an account selection unit 109, a password setting information transmission unit 110, a password rewriting unit 111, and a password changing unit 112, which are built in the data collection device 105, are included in an account abuse prevention device 108 (described later).

Further, a backup telephone line 115 for the internet 104 is installed between the equipment monitoring devices 102 and the data collection device 105.

### <HOW TO OBTAIN ACCOUNT>

The account is obtained by the data collection device 105 and the account abuse prevention device 108 side by the following procedure.

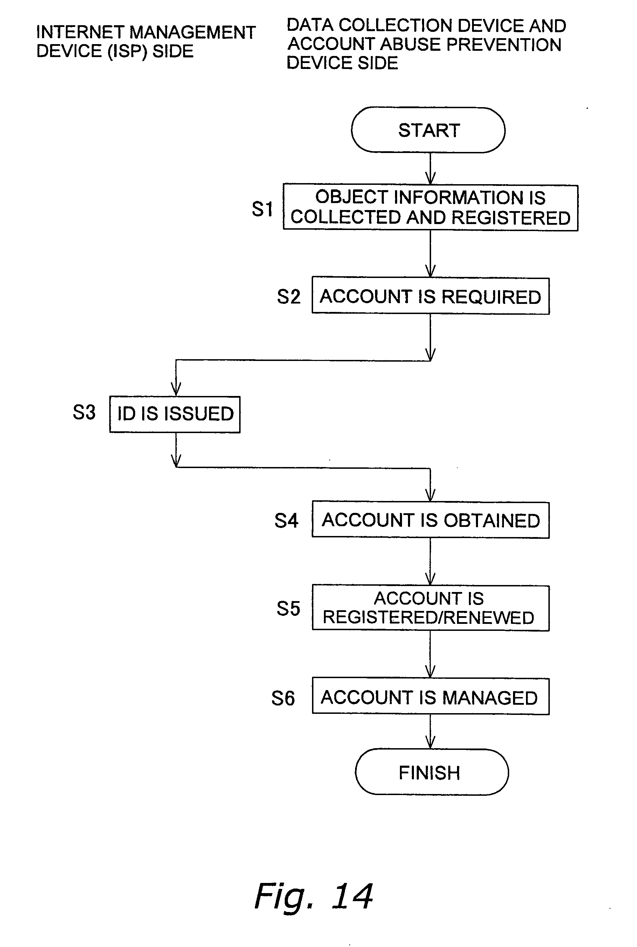

First, in a step S1 shown in the flowchart in Figure 14, object information on a target object such as an air conditioner is collected and registered by the data collection device 105 side.

When the object information is registered, in step S2, the data collection device 105 demands an account from the internet management device 103.

When an account is demanded, in step S3, the internet management device 103 issues an ID.

Next, in step S4, the data collection device 105 obtains an account corresponding to the ID newly issued from the internet management device 103.

Next, in step S5, the account abuse prevention device 108 registers and renews the account.

Then, in step S6, the account abuse prevention device 108 manages the account.

### <CONFIGURATION OF ACCOUNT ABUSE PREVENTION DEVICE 108>

The account abuse prevention device 108 shown in Figure 10 includes an account management database 106, a download management database 107, the account selection unit 109, the password setting information transmission unit 110, the password rewriting unit 111, and the password changing unit 112.

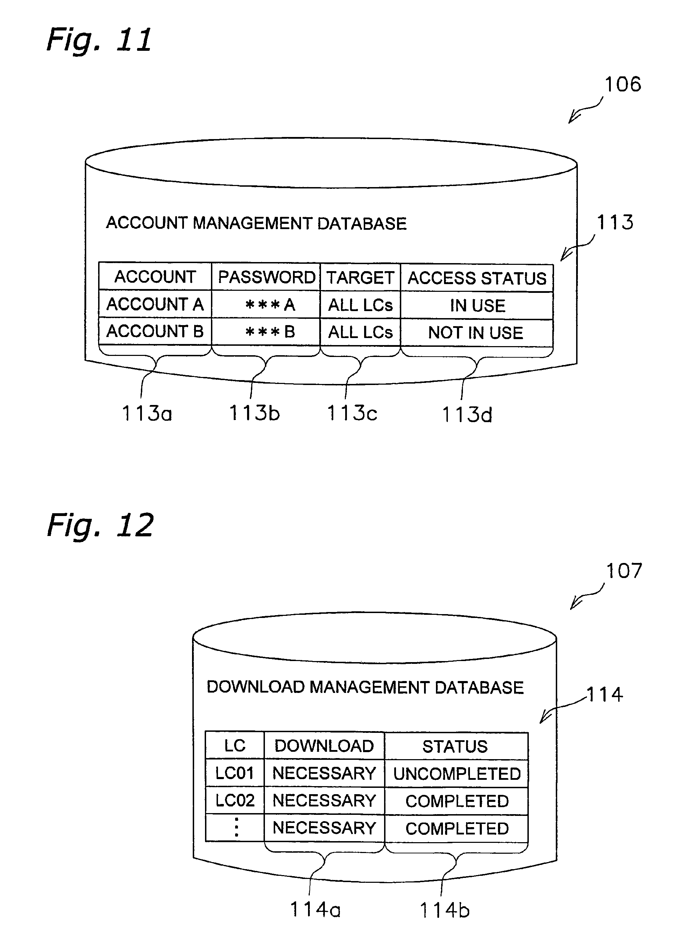

As shown in Figure 11, the account management database 106 stores and manages a first account (hereinafter referred to as "account A"), a second account (hereinafter referred to as "account B"), and passwords for each account, which are used when transmitting data from the plurality of equipment monitoring devices 102 to the data collection device 105 via the internet 104. An account management table 113 is stored in the account management database 106. The account management table 113 includes names 113a of the accounts and also information corresponding to the account A and the account B, i.e., passwords 113b for each account, targets 113c of each account, and a flag 113d indicating that each account is in use.

In the seventh embodiment, the targets 113c of each account are set in all of the equipment monitoring devices 102 (LC). In other words, all of the equipment monitoring devices 102 share the account A and the account B.

As shown in Figure 12, the download management database 107 stores and manages information on download. A download management table 114 is stored in the download management database 107. The download management table 114 includes information on download that corresponds to registration numbers LC01, LC02, --- of the respective equipment monitoring devices 102. In other words, a flag 114a indicating whether or not download is necessary and a status 114b indicating whether or not download is completed are included.

The account selection unit 109 alternately selects between the account A and the account B in each predetermined period (for example, one day). When one of the account A and the account B is selected by the account selection unit 109, the flag 113d on the account management table 113 indicates that the selected account is "in use." Because the daily report from each equipment monitoring device 102 is issued at least once a day, a predetermined time period in which the account is selected and the password is changed can be set to one day or a shorter period.

When access is made by the equipment monitoring device 102 through one of the account A or the account B selected by the account selection unit 109, the password setting information transmission unit 110 transmits the password setting information on the setting condition of the password for the other one of the account A or the account B to the equipment monitoring devices 102 via the internet management device 103. For example, when the equipment monitoring device 102 accesses to the data collection device 105 through the account A and issues the daily report, the password setting information transmission unit 110 transmits the password setting information on the account B to all of the equipment monitoring devices 102.

The password rewriting unit 111 rewrites the password for the other one of the account A or the account B every time the predetermined period elapses, for the internet management device 103 that manages the account A, the account B, and the passwords for each account. The password rewriting unit 111 transmits password rewriting information that includes a new password for the other one of the account A or the account B to the internet management device 103.

Of the passwords 113b stored in the account management database 106, the password 113b for one of the account A and the account B is changed by the password changing unit 112 every time the predetermined period elapses. For example, after a predetermined time period in which the account A is used has elapsed, the password changing unit 112 changes the password 113b for the account A on the account management table 113.

### <OPERATION PROCEDURE OF ACCOUNT ABUSE PREVENTION DEVICE 108>

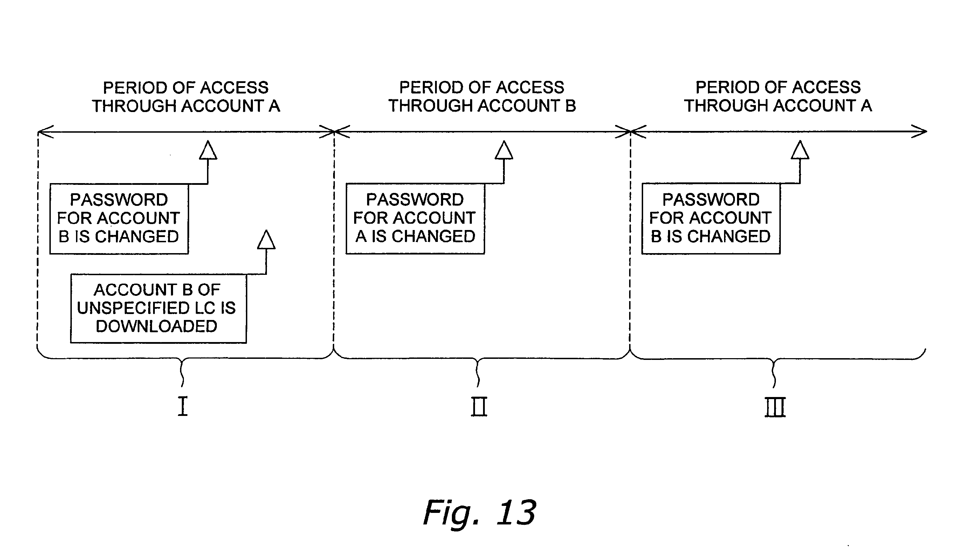

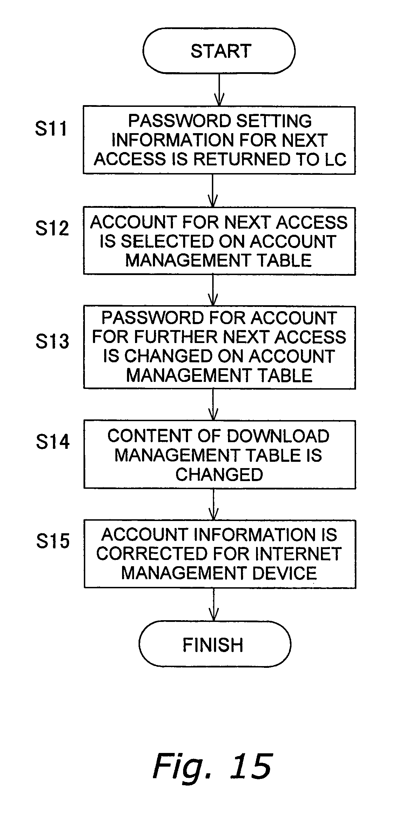

Next, with reference to the time chart in Figure 13 and the flowchart in Figure 15, the operation procedure of the account abuse prevention device 108 is described.

In a first period I in Figure 13, the equipment monitoring devices 102 and the data collection device 105 are in a state in which they can communicate through the account A.

In the period I in Figure 13, first, as shown in step S11 in Figure 15, account information for the next access is returned to all of the equipment monitoring devices 102 (LC). Specifically, on the download management table 114 of the download management database 107 in Figure 12, if the flag 114a for download is "necessary" and the status 114b is "uncompleted," as a reply to the daily report from each equipment monitoring device 102, the password setting information transmission unit 110 transmits the password setting information on the account B for access in a next period II (see Figure 13) to the equipment monitoring devices 102, and subsequently changes the status 114b on the download management table 114 to "completed".

Next, as shown in step S12, after the period I in Figure 13 has elapsed, the account selection unit 109 selects the account B for access in the next period II on the account management table 113 in Figure 11. Specifically, the account selection unit 109 selects the account B for access in the next period II, and the flag 113d on the account management table 113 in Figure 11 indicates "in use" on the selected account B side and "not in use" on the account A side.

Next, as shown in step S 13, the password for the account A for access in a further next period I I I is changed on the account management table 113. Specifically, the password changing unit 112 changes the password 113b for the account A on the account management table 113.

Next, as shown in step S14, the content of the download management table 114 is changed. Specifically, on the download management table 114, the password setting information transmission unit 110 rewrites the flag 114a for download for all of the equipment monitoring devices 102 to "necessary" and changes the status 114b to "uncompleted."

Subsequently, as shown in step S 15, after the contents of the account management table 113 and the download management table 114 are changed, the password rewriting unit 111 corrects the account information for the internet management device 103. Specifically, for the internet management device 103, the password rewriting unit 111 corrects the account information from the account A used in the period I to the account B used in the period II.

By changing the account by the procedure described above, as shown in Figure 13, in the period I in which all of the equipment monitoring devices 102 access to the data collection device 105 through the account A, the password for the other account B is renewed and the information on the renewed password is transmitted to all of the equipment monitoring devices 102. On the other hand, in the period II in which all of the equipment monitoring devices 102 access to the data collection device 105 through the account B, the password for the other account A is renewed and the information on the renewed password is transmitted to all of the equipment monitoring devices 102.

In addition, when the account A is downloaded but the account B is not downloaded for a newly installed equipment monitoring device 102, the account B is downloaded for the newly installed equipment monitoring device 102 in the period I in which access is available through the account A.

After the period II is finished, further, the procedure proceeds to the period III in which all of the equipment monitoring devices 102 access to the data collection device 105 through the account A, as is the case in the period I. There, the password for the other account B is renewed, and the information on the renewed password is transmitted to all of the equipment monitoring devices 102.

Note that when communication between the equipment monitoring devices 102 and the data collection device 105 via the internet 104 cannot be established because the account is changed and the like, it is possible to establish communication via the telephone line 115 that is a different public network as a backup line. In addition, also when the newly installed equipment monitoring device 102 communicates with the data collection device 105 for the first time, communication is established via the telephone lines 115 because an account has not yet been created for this equipment monitoring device 102.

### <CHARACTERISTICS OF THE SEVENTH EMBODIMENT>

### (1)

With the account abuse prevention device 108 in the seventh embodiment, the account selection unit 109 alternately selects between the account A and the account B in each predetermined period. When access is made by the equipment monitoring device 102 through one of the selected account A or the account B, the password setting information transmission unit 110 transmits the password setting information on the other one of the account A or the account B to the equipment monitoring devices 102. For the internet management device 103, the password rewriting unit 111 rewrites the password for the other one of the account A or the account B every time the predetermined period elapses. The password changing unit 112 changes the password for one of the account A and the account B stored in the account management database 106 every time the predetermined period elapses. Accordingly, the two accounts are alternately used in each predetermined period, and thereby abuse of the account can be prevented.

### (2)

Because the account abuse prevention device 108 in the seventh embodiment further includes the download management database 107 that manages the transmission state of the password setting information, it is possible to manage the transmission state of the password setting information on each equipment monitoring device 102. In other words, it is possible to manage the download.

### (3)

In the seventh embodiment, because the download management database 107 stores the status of the transmission state of the password setting information, the status of the transmission state of the password setting information can be managed for each equipment monitoring device 102.

### <ALTERNATIVE EMBODIMENT OF THE SEVENTH EMBODIMENT>

### (A)

In the seventh embodiment, the account management database 106 and the download management database 107 are separately configured. However, the present invention is not limited thereto. The download management database 107 may be integrally configured with the account management database 106. As the download management database 107 is integrated with the account management database 106, the accounts and the transmission state of the password setting information can be collectively managed.

### (B)

The account abuse prevention device 108 in the seventh embodiment uses the account management database 106 to manage the plurality of accounts. However, the present invention is not limited thereto. A server for account management can be used instead of the account management database 106. In this case, the passwords for the accounts and the like can be corrected by the server for account management.

### (C)

In the seventh embodiment described above, the account abuse prevention device 108 built in the data collection device 105 is used in order to prevent abuse of the account. However, the present invention is not limited thereto. The data collection device 105 may perform the account abuse prevention program, and thereby the data collection device 105 itself may perform the function of the account abuse prevention device 108. In this case, the account abuse prevention program includes an account selecting step, a password setting information transmitting step, a password rewriting step, and a password changing step. A first account (account A) and a second account (account B) are used when transmitting data from the plurality of data transmission devices (equipment monitoring devices) 102 to the data collection device 105 via the internet 104. In the account selecting step, the first account and the second account stored in the account management database 106 are alternately selected in each predetermined period. When access is made by the data transmission device 102 through one of the first account or the second account selected, in the password setting information transmission step, the password setting information on the setting condition of the password for the other one of the first account or the second account is transmitted to the data transmission device 102. In the password rewriting step, the password for the other one of the first account or the second account is rewritten every time the predetermined period elapses, for the internet management device 103. The internet management device 103 manages the first account, the second account, and the passwords for each account. In the password changing step, the password for one of the first account and the second account, of the passwords stored in the account management database 106, is changed every time a predetermined period elapses.

Here, in the account selecting step, the first account and the second account are alternately selected in each predetermined period. Further, in the password changing step, the password for one of the first account and the second account, of the passwords stored in the account memory unit, is changed every time a predetermined period elapses. Therefore, as the data collection device 105 performs the account abuse prevention program, the two accounts can be alternately used in each predetermined period, and thereby abuse of the account can be prevented.

### <EIGHTH EMBODIMENT>

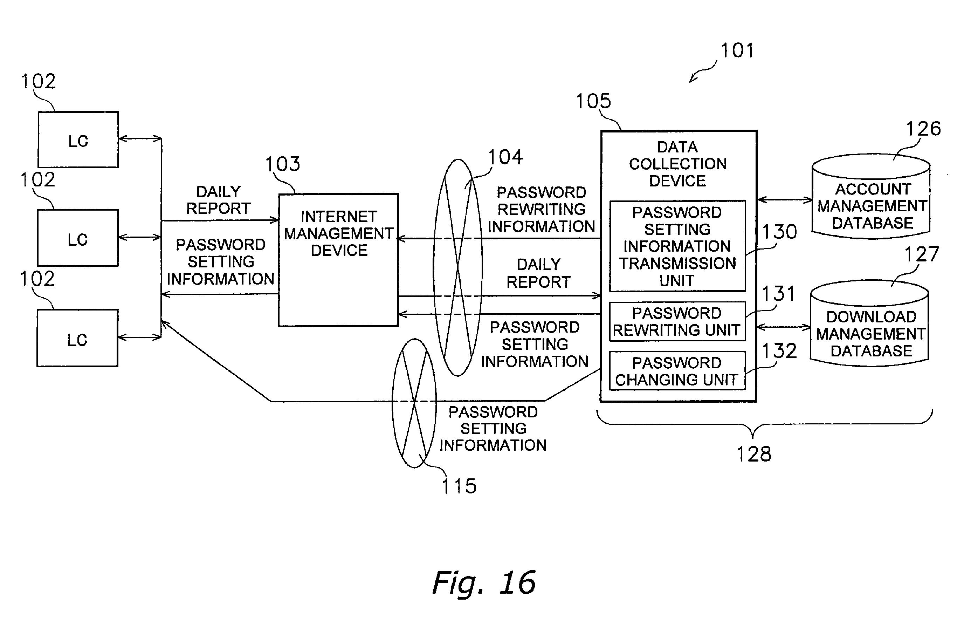

As shown in Figure 16, an account abuse prevention device 128 in an eighth embodiment includes an account management database 126, a download management database 127, a password setting information transmission unit 130, a password rewriting unit 131, and a password changing unit 132. The account abuse prevention device 128 is provided to the equipment management system 101 that is same as the one in the seventh embodiment. Therefore, components of the plurality of equipment monitoring devices 102, the internet management device 103, and the data collection device 105 shown in Figure 16 are same as the components denoted by the same reference numbers in Figure 10.

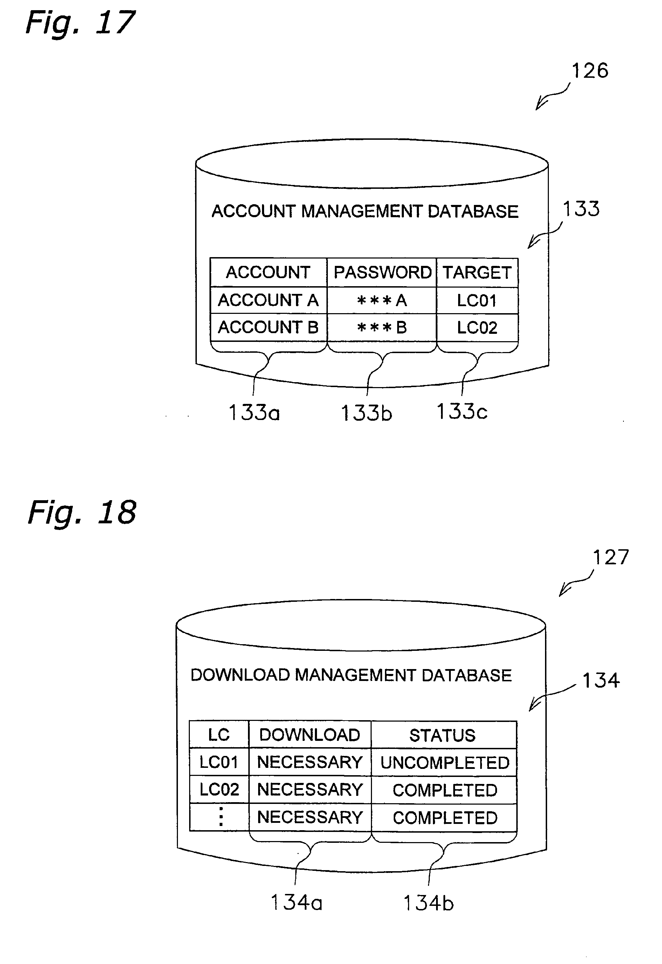

As shown in Figure 17, the account management database 126 stores a plurality of accounts (account A and account B) and passwords for each account, which are used when transmitting data from the plurality of equipment monitoring devices 102 to the data collection device 105 via the internet 104, in a manner corresponding to each equipment monitoring device 102. An account management table 133 includes names 133a of the accounts and also information corresponding to the account A and the account B, i.e., passwords 133b for each account and targets 133c of each account.

In the eighth embodiment, the targets 133c of each account are set in individual equipment monitoring devices 102 (LC). In other words, the equipment monitoring devices 102 have their own unique accounts.

As shown in Figure 18, the download management database 127 stores and manages information on download. A download management table 134 is stored in the download management database 127. The download management table 134 includes information on download corresponding to registration numbers LC01, LC02, --- of the respective equipment monitoring devices 102, i.e., a flag 134a indicating whether or not download is necessary and a status 134b indicating whether or not download is completed.

The password changing unit 132 changes each password for the plurality of accounts stored in the account management database 126 in each predetermined period (for example, one day). Since the daily report from each equipment monitoring device 102 is issued at least once a day, a predetermined period in which the password is changed can be set to one day or a shorter period.

When access is made by the equipment monitoring device 102, the password setting information transmission unit 130 transmits the password setting information on the setting condition of the password to the equipment monitoring devices 102.

The password rewriting unit 131 rewrites the password every time the predetermined period elapses, for the internet management device 103 that manages the plurality of accounts and the passwords for each account.

### <OPERATION PROCEDURE OF ACCOUNT ABUSE PREVENTION DEVICE 128>

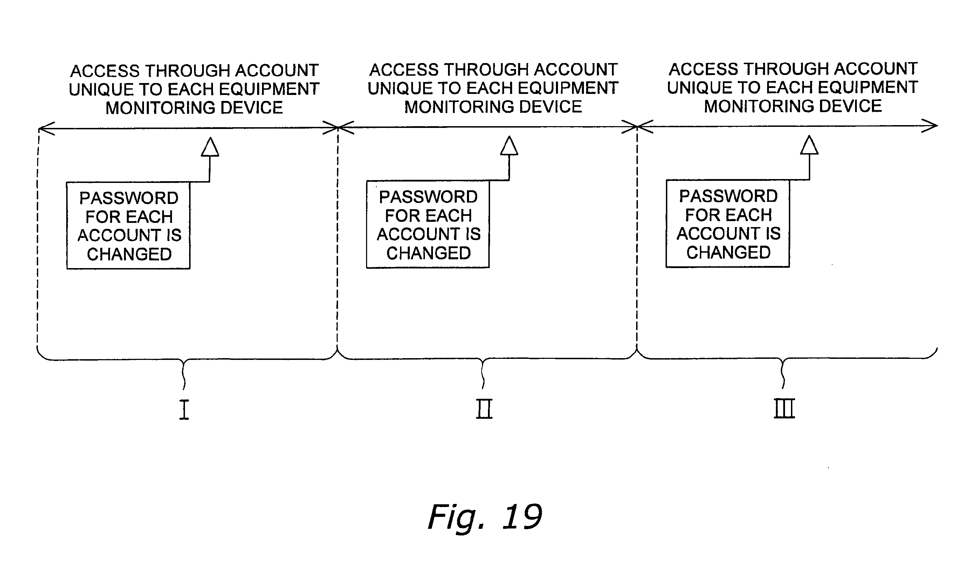

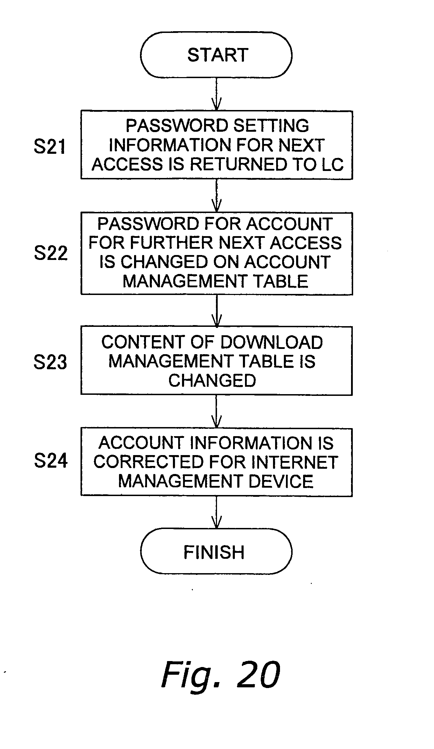

Next, with reference to the time chart in Figure 19 and the flowchart in Figure 20 the operation procedure of the account abuse prevention device 128 is described.

In the first period I in Figure 19, the plurality of equipment monitoring devices 102 and the data collection device 105 are in a state in which they can communicate through the account unique to each equipment monitoring device 102.

In the period I in Figure 19, first, as shown in step S21 in Figure 20, account information for the next access is returned to all of the equipment monitoring devices 102 (LC). Specifically, on the download management table 134 of the download management database 127 in Figure 18, if the flag 134a for download is "necessary" and the status 134b is "uncompleted," as a reply to the daily report from each equipment monitoring device 102, the password setting information transmission unit 130 transmits the password setting information on each account in the next period II (see Figure 19) to the equipment monitoring devices 102 to which each account corresponds, and subsequently changes the status 134b on the download management table 134 to "completed".

Next, as shown in step S22, after the period I in Figure 19 has elapsed, the passwords for each account for access in the further next period III are changed on the account management table 133. Specifically, the password changing unit 132 changes the passwords 133b for each account on the account management table 133 in Figure 17.

Next, as shown in step S23, the content of the download management table 134 is changed. Specifically, on the download management table 134 in Figure 18, the password setting information transmission unit 130 rewrites the flag 114a for download to "necessary" and changes the status 114b to "uncompleted" for all of the equipment monitoring devices 102.

Subsequently, as shown in step S24, after the contents of the account management table 133 and the download management table 134 are changed, the password rewriting unit 131 corrects account information for the internet management device 103. Specifically, for the internet management device 103, the password rewriting unit 131 corrects account information from the password used in the period I to the password used in the period II.

By changing the accounts by the procedure described above, as shown in Figure 19, the passwords for the accounts corresponding to all of the equipment monitoring devices 102 can be changed after the predetermined period has elapsed.

Note that when communication between the equipment monitoring devices 102 and the data collection device 105 via the internet 104 cannot be established because the account is changed and the like, it is possible to establish communication via the telephone line 115 that is a different public network as a backup line.

### <CHARACTERISTICS OF THE EIGHTH EMBODIMENT>

### (1)

With the account abuse prevention device 128 in the eighth embodiment, the account management database 126 stores the plurality of accounts and the passwords for each account in a manner corresponding to each equipment monitoring device 102. The password changing unit 132 changes each password for the plurality of accounts in each predetermined period. When access is made by the equipment monitoring device 102, the password setting information transmission unit 130 transmits the password setting information on the setting condition of the password to the equipment monitoring devices 102. For the internet management device 103, the password rewriting unit 131 rewrites the passwords every time the predetermined period elapses. Accordingly, abuse of the account can be prevented, as the password changing unit 132 changes the password for each account corresponding to each equipment monitoring device 102 in each predetermined period.

### (2)

Because the account abuse prevention device 128 in the eighth embodiment further includes the download management database 127 that manages the transmission state of the password setting information, it is possible to manage the transmission state of the password setting information on each equipment monitoring device 102. In other words, it is possible to manage the download.

### (3)

In the eighth embodiment, because the download management database 127 stores the status of the transmission state of the password setting information, the status of the transmission state of the password setting information can be managed for each equipment monitoring device 102.

### <ALTERNATIVE EMBODIMENT OF THE EIGHTH EMBODIMENT>

### (A)

In the eighth embodiment, the account management database 126 and the download management database 127 are separately configured. However, the present invention is not limited thereto. The download management database 127 may be integrally configured with the account management database 126. As the download management database 127 is integrated with the account management database 126, the accounts and the transmission state of the password setting information can be collectively managed.

### (B)

The account abuse prevention device 128 in the eighth embodiment uses the account management database 126 to manage the plurality of accounts. However, the present invention is not limited thereto. A server for account management can be used instead of the account management database 126. In this case, the passwords for the accounts and the like can be corrected by the server for account management.

### <NINTH EMBODIMENT>

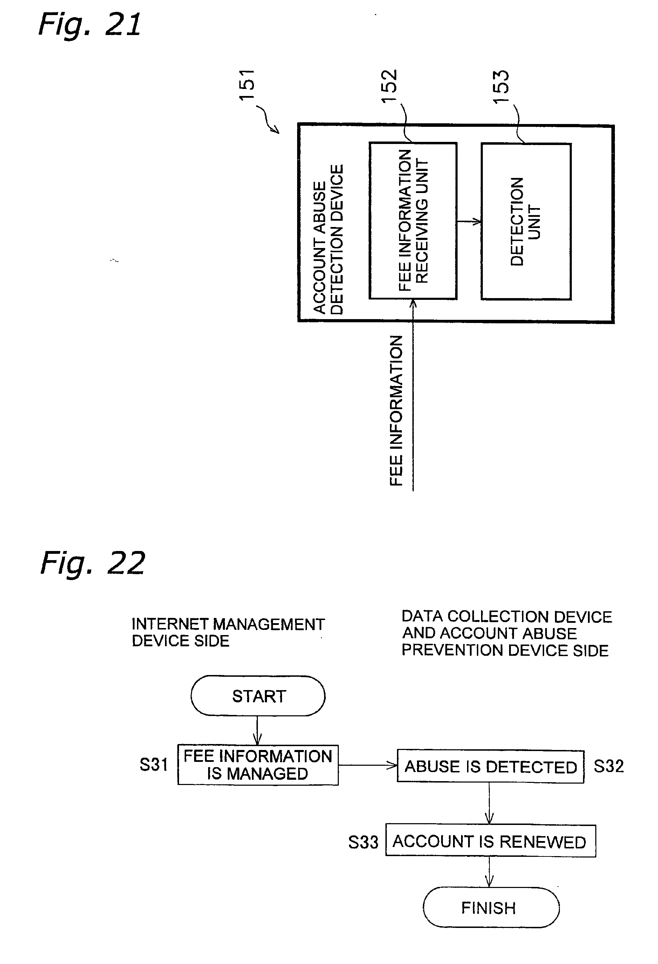

In the above described seventh and eighth embodiments, by changing the accounts for access on a daily basis, abuse of the account is prevented. Consequently, the period of damage caused by abuse can be minimized to two days. Here, in order to promptly detect abuse of an account, an account abuse detection device 151 shown in Figure 21 may be added to the above described account abuse prevention device 108 or 128 so that abuse of the account can be promptly detected as the data collection device 105 receives information on the access-amount-related value such as an access fee from the internet management device 103.

### <CONFIGURATION OF ACCOUNT ABUSE DETECTION DEVICE 151>

As shown in Figure 21, the account abuse detection device 151 includes a fee information receiving unit 152 and a detection unit 153.

The fee information receiving unit 152 receives fee information from the internet management device 103. The fee information is information related to the access fee for using the internet 104 by the internet management device 103 through the account.

The detection unit 153 compares the access fee for using the internet 104 by the internet management device 103 through the account to a predetermined threshold value and detects abuse of the account.

### <DETECTION PROCEDURE OF ACCOUNT ABUSE>

As shown in the flowchart in Figure 22, first, in step S31, daily fee information is managed by the internet management device 103. The fee information is periodically transmitted everyday to the account abuse detection device 151 provided to the account abuse prevention device 108 or 128.

Next, in step S32, the account abuse detection device 151 detects abuse of the account based on the fee information.

When abuse of the account is detected by the account abuse detection device 151, in step S33, the account is renewed. For example, it will suffice if only the password or both the account and password are changed by the above described account abuse prevention device 108 or 128. At the same time, information on the detection of abuse of the account, a situation of abuse, and the like is transmitted from the data collection device 105 to the internet management device 103 and a personal computer owned by an account holder.

### <ALTERNATIVE EMBODIMENT OF THE NINTH EMBODIMENT>

### (A)

In the ninth embodiment, an example is described in which the fee information transmitted from the internet management device 103 is received. However, the present invention is not limited thereto. Information on the amount of incoming data in the internet management device 103 may be received. Because the amount of incoming data has a correlation with the access fee, it is possible to estimate the access fee from the daily amount of incoming data. When the access fee is estimated from the amount of incoming data, even when the number of equipment monitoring devices 102 is small, the probability of misdetection is small.

### <TENTH EMBODIMENT>

When a new equipment monitoring device (LC) 102 is added to the above described equipment management system 101 in the seventh and eighth embodiments, account information can be set in the following procedure.

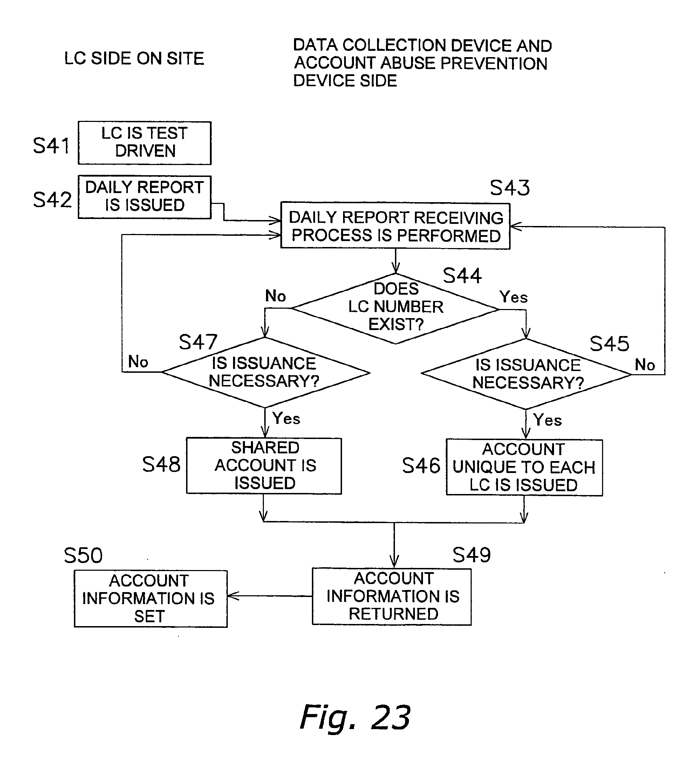

First, in step S41 in the flowchart in Figure 23, at a site where an object such as an air conditioner is installed, a new equipment monitoring device 102 is mounted and then the equipment monitoring device 102 is test driven.

Next, in step S42, a first daily report is issued from the new equipment monitoring device 102 to the data collection device 105. Here, at this point, because an account is not set up yet, the first daily report is issued via the backup telephone line 115 instead of the internet 104.

Next, in step S43, the data collection device 105 performs a daily report receiving process.

Next, in step S44, the data collection device 105 determines whether or not a registration number of the equipment monitoring device 102 exists. When the registration number exists, the procedure proceeds to step S45. When the registration number does not exist, the procedure proceeds to step S47.

In step S45, the data collection device 105 determines whether or not it is necessary to issue an account. When it is necessary, in step S46, a process to issue a unique account corresponding to the registration number of the equipment monitoring device 102 is performed.

On the other hand, in step S47, the data collection device 105 determines whether or not it is necessary to issue an account. When it is necessary, in step S48, a process to issue an account shared by all of the equipment monitoring devices 102 is performed.

Next, in step S49, the data collection device 105 returns the account information to the new equipment monitoring devices 102.

Subsequently, in step S50, the new equipment monitoring devices 102 sets up the account information. This enables future daily reports to be issued via the internet 104.

### INDUSTRIAL APPLICABILITY

The present invention is widely applicable to devices or programs for promptly detecting or preventing abuse of account used for authenticating access to a public network such as the internet.

## Claims

1. An account abuse detection device (6,46, 56, 66, 76, 86) comprising:
an access-amount-related value information receiving unit (11) configured to receive, from a management device (3) configured to manage a specific account used when transmitting data from a plurality of data transmission devices (2) to a data collection device (5) via a public network (4), access-amount-related value information on an access-amount-related value related to the amount of access to the public network (4) through the account; and
a detection unit (12) configured to compare the access-amount-related value to a predetermined threshold value to detect abuse of the account.

2. The account abuse detection device (6) according to claim 1 wherein,
the threshold value is a difference threshold value for a difference in the access-amount-related value in each predetermined period, and
the detection unit (12) compares a difference in the access-amount-related value in each predetermined period to the difference threshold value to detect abuse of the account.

3. The account abuse detection device (46) according to claim 1 further comprising an access-amount-related value prediction unit (13) configured to determine a predicted trend value of an access-amount-related value from a history of the access-amount-related value,
wherein
the threshold value is the predicted trend value, and
the detection unit (12) compares the access-amount-related value to the predicted trend value to detect abuse of the account.

4. The account abuse detection device (6, 46, 56, 66, 76, 86) according to claim 1, wherein
the access-amount-related value is an access fee for using the public network (4).

5. The account abuse detection device (56) according to claim 4 further comprising an access fee estimation unit (14) configured to estimate the access fee from an amount of incoming data in each predetermined period, the data being received by the data collection device (5),
wherein
the threshold value is an estimated total value that is an estimated value of the total of an access fee determined by the access fee estimation unit (14), and
the detection unit (12) compares the access fee in each predetermined period to the estimated total value to detect abuse.

6. The account abuse detection device (66) according to claim 4 further comprising an access fee difference estimation unit (15) configured to estimate the difference in the access fee in each predetermined period from the amount of incoming data in each predetermined period, the data being received by the data collection device (5),
wherein
the threshold value is an estimated difference value that is an estimated value of the difference in an access fee determined by the access fee difference estimation unit (15), and
the detection unit (12) compares the difference in the access fee in each predetermined period to the estimated difference value to detect abuse.

7. The account abuse detection device (76) according to claim 4 further comprising:
an access fee estimation unit (14) configured to estimate the access fee from the amount of incoming data in each predetermined period, the data being received by the data collection device (5), and
an access fee difference estimation unit (15) configured to estimate the difference in the access fee in each predetermined period from the amount of incoming data in each predetermined period, the data being received by the data collection device (5),
wherein
the threshold value is an estimated fee ratio of an estimated difference value that is an estimated value of the difference in an access fee determined by the access fee difference estimation unit (15) to an estimated total value that is an estimated value of the total of an access fee determined by the access fee estimation unit (14), and
the detection unit (12) compares a fee ratio of the difference in the access fee in each predetermined period to the total of the access fee to the estimated fee ratio to detect abuse.

8. The account abuse detection device (86) according to claim 4 further comprising an access fee prediction unit (16) configured to determine a predicted fee trend value of an access fee from a history of the amount of incoming data in each predetermined period, the data being received by the data collection device (5),
wherein
the threshold value is a predicted fee trend value, and
the detection unit (12) compares the access fee in each predetermined period to the predicted fee trend value to detect abuse of the account.

9. The account abuse detection device (6, 46, 56, 66, 76, 86) according to any one of claim 1 through claim 8, wherein
the data transmission device (2) is an equipment monitoring device.

10. The account abuse detection device (46, 56, 66, 76, 86) according to claim 1, wherein the threshold value is a data collection device side access-amount-related value related to the amount of access to the public network (4) by the data collection device (5) through the account, and
the detection unit (12) compares a management device side access-amount-related value related to the amount of access to the public network (4) by the management device (3) through the account to the data collection device side access-amount-related value to detect abuse of the account.

11. A data collection device (5) comprising:
an access-amount-related value information receiving function to receive, from a management device (3) configured to manage a specific account used when transmitting data from a plurality of data transmission devices (2) to the data collection device (5) via a public network (4), access-amount-related value information on a access-amount-related value related to the amount of access to the public network (4) through the account, and
a detection function to compare the access-amount-related value to a predetermined threshold value to detect abuse of the account.

12. An account abuse detection program comprising:
an access-amount-related value information receiving step of receiving, from a management device (3) configured to manage a specific account used when transmitting data from a plurality of data transmission devices (2) to a data collection device (5) via a public network (4), access-amount-related value information on an access-amount-related value related to the amount of access to the public network (4) through the account; and
a detection step of comparing the access-amount-related value to a predetermined threshold value to detect abuse of the account.

13. An account abuse prevention device (108), comprising:
an account memory unit (106) storing a first account, a second account, and
passwords for each account, which are used when transmitting data from a plurality of data transmission devices (102) to a data collection device (105) via a public network (104);
an account selection unit (109) configured to alternately select between the first account and the second account in each predetermined period;
a password setting information transmission unit (110) configured to transmit, when access is made by the data transmission device (102) through one of the first account or the second account selected by the account selection unit (109), password setting information on a setting condition of the password for the other one of the first account or the second account, to the data transmission device (102);
a password rewriting unit (111) configured to rewrite the password for the other one of the first account or the second account every time the predetermined period elapses, for a management device (103) configured to manage the first account, the second account, and the passwords for each account; and
a password changing unit (112) configured to change the password for one of the first account and the second account, of the passwords stored in the account memory unit (106), every time the predetermined period elapses.

14. An account abuse prevention device (128) comprising:
an account memory unit (126) storing a plurality of accounts and passwords for each account, which are used when transmitting data from a plurality of data transmission devices (102) to a data collection device (105) via a public network (104), in a manner corresponding to each data transmission device (102);
a password changing unit (132) configured to change each password for the plurality of accounts in each predetermined period;
a password setting information transmission unit (130) configured to transmit, when access is made by the data transmission device (102), password setting information on a setting condition of the password to the data transmission devices (102); and
a password rewriting unit (131) configured to rewrite the password every time the predetermined period elapses, for a management device (103) configured to manage the plurality of accounts and the passwords for each account.

15. The account abuse prevention device (108, 128) according to claim 13 or 14 further comprising a management database (107) for managing a transmission state of the password setting information.

16. The account abuse prevention device (108, 128) according to claim 15, wherein the management database (107) is configured to store a status of a transmission state of the password setting information.

17. The account abuse prevention device (108, 128) according to claim 15, wherein the management database (107) is integrated with the account memory unit (106).

18. An account abuse prevention program comprising:
an account selecting step of alternately selecting between a first account and a second account in each predetermined period, which are used when transmitting data from a plurality of data transmission devices (102) to a data collection device (105) via a public network (104);
a password setting information transmitting step of transmitting, when access is made by the data transmission device (102) through one of the first account and
the second account that is selected, password setting information on a setting condition of a password for the other one of the first account or the second account, to the data transmission device (102);
a password rewriting step of rewriting the password for the other one of the first account or the second account every time the predetermined period elapses, for a management device (103) configured to manage the first account, the second account, and the passwords for each account; and
a password changing step of changing the password for one of the first account and the second account every time the predetermined period elapses.
